# EUROPEAN PATENT SPECIFICATION

(11) **EP 3 352 006 B1**
(45) Date of publication and mention of the grant of the patent: **19.05.2021**
(21) Application number: 16845477.5
(22) Date of filing: 19.02.2016
(51) Int. Cl.: G02F 1/1339, G02F 1/01

(54) **SEALANT COMPOSITION, DISPLAY PANEL AND PREPARATION METHOD THEREFOR, AND DISPLAY APPARATUS**
DICHTUNGSMITTELZUSAMMENSETZUNG, ANZEIGETAFEL UND HERSTELLUNGSVERFAHREN DAFÜR SOWIE ANZEIGEVORRICHTUNG
COMPOSITION D'ÉTANCHÉITÉ, PANNEAU D'AFFICHAGE ET SON PROCÉDÉ DE PRÉPARATION, ET APPAREIL D'AFFICHAGE

(30) Priority: 16.09.2015 CN 201510589826
(43) Date of publication of application: 25.07.2018
(73) Proprietor: BOE Technology Group Co., Ltd., Beijing 100015 (CN); Beijing BOE Display Technology Co., Ltd., Beijing 100176 (CN)
(72) Inventor: REN, Jinyu, Beijing 100176 (CN); SONG, Yongzhi, Beijing 100176 (CN); HU, Tengteng, Beijing 100176 (CN); XU, Changjian, Beijing 100176 (CN); CHENG, Xiangyu, Beijing 100176 (CN)
(74) Representative: Cohausz & Florack
(86) International application number: PCT/CN2016/074080
(87) International publication number: WO 2017/045361

(56) References cited:
- WO-A1-2015/123824
- CN-A- 102 955 298
- CN-A- 103 048 828
- CN-A- 104 297 990
- CN-A- 104 793 408
- CN-A- 104 880 864
- CN-A- 105 116 629
- US-A1- 2009 231 524
- US-A1- 2012 033 150
- US-A1- 2016 116 650
- US-A1- 2017 139 244

## Description

### Related Application Information

This Patent Document claims priority to China Patent Application No. 201510589826.0 filed on September 16, 2015.

### Technical Field

The present invention relates to the technical field of display technology, particularly to a sealant composition, a display panel and a method for manufacturing the same and a display device.

### Backgrounds

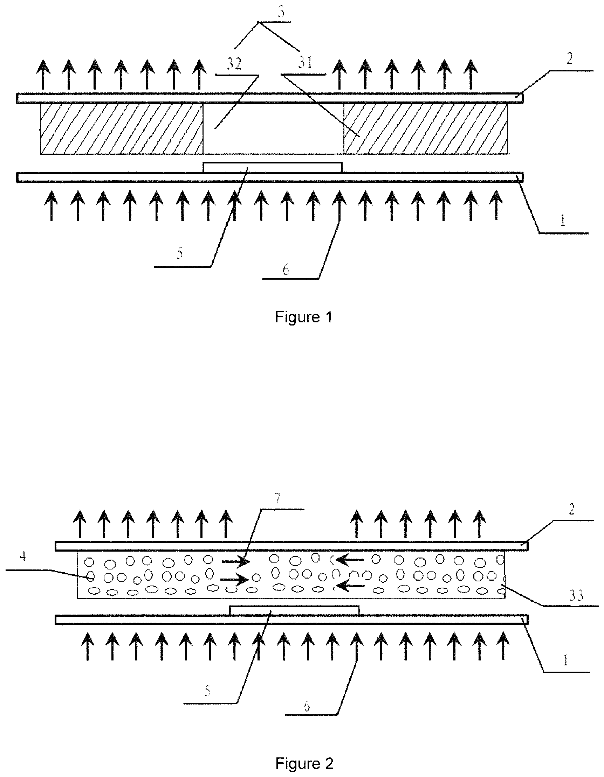

As shown in Fig. 1, the conventional display panel includes an array substrate 1 and a color film substrate 2, wherein the array substrate 1 and the color film substrate 2 are bonded together after alignment during the cell process and Sealant 3 is generally applied on the non-display region in the periphery of the array substrate 1 (where a large number of signal traces are arranged) to realize curing and bonding.

The signal traces often are made of metal and the metal traces are light-proof, thus multiple light-proof portions 5 are resulted in the periphery of the array substrate 1. As shown in Fig. 1, when the incident light 6 for curing is incident from the array substrate side, sealant 3 not shielded by the light-proof portions 5 could be cured completely thereby resulting completely cured portions 31 whereas sealant 3 shielded by the light-proof portions 5 cannot be completely cured and thereby resulting incompletely cured portion 32. Such incomplete curing of sealant will contaminate the surrounding liquid crystal, resulting in some issues such as peripheral defects and line residual image and the like. In particular, these problems are more serious in narrow-border products
US2017/139244 (family member of CN104793408) addresses the same technical problem as the current application and discloses a sealant composition, including sealant and a light converting material uniformly distributed in the sealant. The light converting material is capable of converting incident light entering into the sealant to light for curing the sealant. The document also discloses that the light converting material is a particulate light converting material constituted by rare earth ions doped in a base material.

### Summary of the Invention

To solve the above-mentioned problems, the present invention is to provide a sealant composition, a display panel comprising the cured sealant composition and a method for manufacturing the same, and a display device.

The sealant composition provided in the present invention comprises a sealant and a light converting material uniformly distributed in the sealant, wherein the light converting material comprises a particulate quantum dot material and is capable of converting incident light entering into the sealant to light for curing the sealant.

Preferably, the light converting material accounts for 0.5 to 5.0% by mass of the sealant composition, and more preferably, 1.0-4.0% by mass of the sealant composition.

Preferably, the quantum dot material has a particle size in a range of 1 nm to 1000 nm.

Preferably, the quantum dot material comprises any one or more of CdS, ZnS, CdSe, and carbon quantum dots.

Preferably, the incident light is ultraviolet light; and the sealant comprises a visible light curable resin.

Another object of the present invention is to provide a display panel comprising an array substrate and a color film substrate, wherein the array substrate and the color film substrate are bonded into a cell by curing of the sealant composition. Yet another object of the present invention is to provide a method for manufacturing the above-described display panel, comprising the steps of: preparing a sealant composition;
applying the sealant composition on the non-display region in the periphery of the array substrate or on the corresponding region of the color film substrate to the non-display region in the periphery of the array substrate; and
curing the sealant composition by irradiating it with incident light.

Preferably, the step of preparing the sealant composition comprises uniformly mixing the sealant and the light converting material to obtain the sealant composition.

Preferably, the step of applying the sealant composition on the non-display region in the periphery of the array substrate or on the corresponding region of the color film substrate to the non-display region in the periphery of the array substrate comprises adding the sealant composition into a coating equipment and spraying the sealant composition on the non-display region in the periphery of the array substrate or on the corresponding region of the color film substrate to the non-display region in the periphery of the array substrate through the nozzle of the coating equipment.

Preferably, the step of curing the sealant composition by irradiating it with incident light comprises irradiating from array substrate side for a predetermined time with incident light having a predetermined intensity, so as to complete the curing of the sealant composition.

For the sealant composition, the display panel and the display device provided in the present invention, the issues such as contamination of liquid crystal, peripheral defects and line residual image due to the incomplete curing of the sealant are prevented because the sealant composition comprises light converting material which could convert the incident light into the light for curing the sealant, and thus the sealant composition which cannot be irradiated directly by the incident light also could be cured by the converted light obtained from the light converting material.

### Description of the drawings

Figure 1 is a schematic diagram of the curing process of the display panel in the prior art;
Fig. 2 is a schematic diagram of the curing process of display panels in Example 1 or 2 of the present invention.

### Detailed Description of Embodiments

The present invention will be described in further detail with reference to the accompanying drawings and specific embodiments, so that a person skilled in the art can get better understanding of the technical solutions of the invention.

As shown in Fig. 2, an embodiment of the present invention provides a sealant composition 33 comprising a sealant and a light converting material 4 uniformly distributed in the sealant, wherein the light converting material 4 is capable of converting the incident light 6 which irradiate to the sealant into the light 7 which can cure the sealant, so that the sealant which cannot be irradiate directly by the incident light 6 can also be cured by the light converted by the light converting material 4 and further the issues such as contamination of liquid crystal, peripheral defects and line residual image due to the incomplete curing of the sealant are prevented.

Preferably, the light converting material 4 accounts for 0.5 to 5.0% by mass of the sealant composition 33.

It should be understood that, the amount of the light converting material 4 in the sealant composition 33 can be modified without affecting the viscosity of the sealant, as well as taking into account the incident light intensity, the light conversion efficiency of the light converting material, the difficulty extent of the curing and the cost of the process. The above specific range should not be regarded as the limitation to the mass percentage of the light converting material 4 in the sealant composition 33.

More preferably, the light converting material 4 accounts for 1.0 to 4.0% by mass of the sealant composition 33. Such mass percentages of the light converting material 4 in the sealant composition 33 is relatively suitable in the general curing process, resulting complete curing of the sealant without affecting the adhesive force of the sealant and being a low cost.

Preferably, the light converting material 4 comprises a particulate light converting material. The particulate light converting material 4 can be uniformly distributed in the sealant and does not adversely affect the adhesive force of the sealant.

Preferably, the particulate light converting material comprises a quantum dot material and an up-conversion material. The quantum dot material is capable of converting the incident light 6 into a curing light 7 with a longer wavelength for curing the sealant, and the selection of the wavelength of an emitted light can be realized by selecting the quantum dot material and the particle size. That is to say, a person skilled in the art can select a suitable quantum dot material and the particle size thereof depending on the specific curing conditions.

Preferably, the quantum dot material has a particle size in a range of 1 nm to 1000 nm, preferably 1 nm to 100 nm, more preferably 1 nm to 50 nm. In view of the adhesive force of the sealant, the quantum dot material having such particle sizes could satisfy a requirement of dopant with small particle size for the sealant. At the same time, the quantum dot material having such particle sizes can emit the light suitable for curing of a majority of sealants.

The up-conversion material is capable of converting the incident light 6 into a curing light 7 with a shorter wavelength for curing the sealant. An up-conversion material can be used if it is desired to convert the incident light 6 into a curing light 7 with a shorter wavelength for curing the sealant, wherein the wavelength of the emitting light is independent with the particle size of the up-conversion material and is depended on the selection of the material itself.

Preferably, the up-conversion material has a particle size in a range of 1 to 3000 nm, preferably 10 nm to 1000 nm, more preferably 100 nm to 1000 nm. In view of the adhesive force of the sealant, the up-conversion material having such particle sizes can satisfy a requirement of dopant with small particle size for the sealant.

As described above, an up-conversion material may be used if it is desired to convert the incident light 6 into a curing light 7 with shorter wavelength, while a quantum dot may be used if it is desired to convert the incident light 6 into a curing light 7 with longer wavelength. If both of the above-mentioned conversions are desired, both the quantum dot material and the up-conversion material may be contained at the same time.

Preferably, the quantum dot material comprises any one or more of CdS, ZnS, CdSe, and carbon quantum dots. It should be understood that other types of quantum dots are also possible as long as the incident light 6 can be converted into a curing light 7 that can cure the sealant. The quantum dot material and the particle size thereof can be selected depending on the specific application and are not limited herein.

Preferably, the up-conversion material comprises any one or more of NaYF₄:Er³⁺, Yb³⁺, CaF₂(Er³⁺), ZrO₂(Er³⁺), and Ca₃(PO₄)₂:Tm³⁺. It should be understood that other types of up-conversion material are also possible as long as the incident light 6 can be converted into a curing light 7 which can cure the sealant. The up-conversion materials can be selected depending on the specific application and are not limited herein.

Next, examples of the sealant composition 33 containing the quantum dots and the sealant composition 33 of the up-conversion material will be described, respectively.

### Sealant Composition 33 Containing a Quantum Dot

The sealant in the sealant composition 33 containing the quantum dot may be E-101 or other types of sealants as long as the sealant includes a visible light curable resin. The quantum dot material may comprise CdS/ZnS, CdS/ZnS and the quantum dots have a particle size of 1 to 10 nm. The quantum dot may account for 1.0 to 4.0% by mass of the sealant composition 33, such as 2.0%. When the visible light curable resin is cured with ultraviolet light having a wavelength of 330 nm to 400 nm, the quantum dot material excitated by ultraviolet light can emit visible light having a wavelength of about 400 nm which can cure the visible light curable resin.

The specific curing process is as follows: the ultraviolet light as the incident light 6 which comes from the side of the array substrate 1 is irradiated onto the sealant composition 33, wherein the quantum dot material in the sealant composition 33 receives ultraviolet light and emits visible light of 400 nm wavelength, and the quantum dot particles irradiate visible light to the surrounding which make the visible light curable resin be cured under the irradiation. Since the quantum dot particles are uniformly distributed in the sealant composition 33 and emit visible light to the surrounding, the visible light curable resin of the sealant which is shielded by the metal traces in the light-proof portions 5 can also be cured by the visible light emitted by the quantum dots on the both sides thereof. Therefore, the sealant composition 33 can be cured completely and would not result in the issues such as contamination of liquid crystal, peripheral defects and line residual image due to the incomplete curing of the sealant.

### Sealant Composition 33 Containing an Up-conversion Material

The sealant in the sealant composition 33 containing the up-conversion material may be E-101, SW-B21, SW-B96 and the like, and it may account for 1.0 to 4.0% by mass of the sealant composition 33, such as 3.5%. The above-mentioned sealant includes an ultraviolet curable resin cured under ultraviolet light having a wavelength of 332 nm or 376 nm. It should be understood that other types of sealant containing an ultraviolet curable resin are also suitable, and it is not particularly limited herein.

The up-conversion material may comprise CaF₂(Er³⁺) which may have a particle size of from 100 nm to 1000 nm and may emit ultraviolet light of 332 nm or 376 nm under excitated by 480 nm visible light, wherein the ultraviolet light can be used for curing the sealant. It should be understood that other types of the up-conversion material may also be used, and it is not particularly limited herein.

It should be understood that other types of up-conversion material are also feasible as long as the incident light 6 can be converted into curing light 7 that can cure the sealant.

The specific curing process is as follows: the infrared light or visible light as the incident light 6 which comes from the side of the array substrate 1 is irradiated onto the sealant composition 33, wherein the up-conversion material in the sealant composition 33 receives visible light having 480 nm wavelength and emits ultraviolet light of 332 nm or 376 nm wavelength to the surrounding, and the ultraviolet curable resin can be cured under the irradiation. Since the particles of the up-conversion material are uniformly distributed in the sealant composition 33 and emit ultraviolet light to the surrounding, the ultraviolet curable resin in the sealant which is shielded by the metal traces in the light-proof portions 5 can also be cured by the ultraviolet light emitted by the up-conversion material on the both sides thereof. Therefore, the sealant composition 33 can be cured completely and would not result in the issues such as contamination of liquid crystal, peripheral defects and line residual image due to the incomplete curing of the sealant.

Another embodiment of the present invention provides a method for manufacturing a display panel, comprising the steps of:
preparing a sealant composition;
applying the sealant composition on the non-display region in the periphery of the array substrate or on the corresponding region of the color film substrate to the non-display region in the periphery of the array substrate; and
curing under the irradiation of the incident light 6.

Hereinafter, with reference to Fig. 2, the method for manufacturing a display panel according to the present invention will be described in detail.

### S1 Preparing a Sealant Composition

The sealant composition 33 is obtained by uniformly mixing the light converting material, the sealant and a spacer. The light converting material and the sealant may be mixed in, for example, a vacuum stirrer by stirring and mixing. Spacers known in the art may be used, such as silica beads having a particle size of from 1 to 10 µm.

The sealant and the light converting material are mixed at an appropriate mass percentage. For example, the light converting material accounts for 0.5 to 5.0% by mass based on the total mass of the composition; more preferably, 1.0 to 4.0% by mass. The above-mentioned sealant and the light converting materials may be selected depending on the specific application. For example, if the sealant includes an ultraviolet curable resin and the incident light 6 is infrared light, the conversion of the incident light 6 may be performed by using an up-conversion material, wherein the incident infrared light is converted into ultraviolet light by the up-conversion material.

If the sealant material includes visible light curable resin, and the incident light 6 is ultraviolet light, the conversion of the incident light 6 may be performed by using the quantum dot material, wherein the incident ultraviolet light is converted into visible light by the quantum dot material.

S2 applying the sealant composition on the non-display region in the periphery of the array substrate or on the corresponding region of the color film substrate to the non-display region in the periphery of the array substrate

The sealant composition 33 is added into a coating equipment and is sprayed on the non-display region in the periphery of the array substrate or on the corresponding region of the color film substrate to the non-display region in the periphery of the array substrate through the nozzle of the coating equipment. As shown in Fig. 2, a sealant composition 33 is coated between the array substrate 1 and the color film substrate 2. It should be understood that the above-mentioned coating equipment belongs to the prior art and is not described in detail herein.

### S3 curing under the irradiation of the incident light

The incident light 6 of a predetermined intensity is irradiated from the side of the array substrate for a predetermined time, so as to complete the curing of the sealant composition 33. The intensity of the visible light used may be 10,000 to 20,000 mJ/cm² and the intensity of the ultraviolet light used may be 3,000 to 7,000 mJ/cm². The irradiation time may be 50-70 seconds.

The incident light 6 is converted into the light that can cure the sealant composition 33 by distributing the light converting material 4 in the sealant composition 33. The appropriate quantum dot or up-conversion material and appropriate particle size thereof can be selected depending on the incident light 6 and the sealant composition 33 to complete the conversion of the incident light 6 to the curing light 7. Therefore, the curing light 7 is incident to the sealant composition 33 in a region corresponding to the light-proof portion 5 so as to make the sealant composition 33 in the region cured.

In this case, even if the incident light 6 cannot irradiate on the sealant composition 33 in a region corresponding to the light-proofing portion 5, the sealant composition 33 still can be cured completely since the curing is performed with the light emitted by the light converting material 4. That is to say, since the light converting material 4 is in the form of particles and is uniformly distributed in the sealant composition 33, the sealant composition 33 can be cured as a whole and no incomplete curing occurs.

In the specific application, the irradiation intensity and the irradiation time of the incident light 6 can be calculated according to the content and conversion efficient of the light converting material 4 and the amount of the light curable resin, and the calculation method belongs to the prior art and is not described in detail herein.

Still another embodiment of the present invention provides a display panel comprising an array substrate and a color film substrate, wherein the array substrate and the color film substrate are bonded by curing of the above-mentioned sealant composition.

Yet another embodiment of the present invention provides a display device including the above-described display panel.

### Examples

### Example 1

The light-converting material, the sealant and the spacer were mixed uniformly by a vacuum stirrer according to the components and amounts (mass percent) shown in table 1 below, so as to obtain a sealant composition. The obtained sealant composition is applied on the non-display area in the periphery of an array substrate (purchased from BOE Technology Group Co., Ltd., specification: 1850 mm x 1850 mm) by a coating equipment SD-9062 (available from Shibaura Corporation). The sealant composition is cured with the incident light irradiated from the array substrate side under the curing parameters shown in table 1.

### Example 2

A display panel was prepared in the same manner as in Example 1 except for the materials and curing parameters shown in Table 1.

### Comparative Example

A display panel was prepared in the same manner as in Example 1 except that only the sealant and the spacer were used for bonding without adding light converting material.

**Table 1**

| | Example 1 | Example 2 | Comparatively Example |
|---|---|---|---|
| sealant and amount | S-WB73 0.77g/substrate (98%) | S-WB73 0.77g/substrate (98%) | S-WB73 0.77g/substrate (99%) |
| spacer (amount and particle size) | Silica beads (1%, 4µm) | Silica beads (1%, 4µm) | Silica beads (1%, 4µm) |
| Light converting material (amount and particle size) | Quantum dot CdS/ZnS (1%, 10nm) | Up-conversion material CaF2(Er3+) (1%, 150nm) | 0% |
| Incident light | Ultraviolet light | Visible light | Ultraviolet light |
| wavelength | 360nm | 430nm | 360nm |
| intensity | 6,000 mJ/cm² | 15,000 mJ/cm² | 6,000 mJ/cm² |
| Irradiation time | 60s | 60s | 60s |

It should be understood that the above embodiments of the invention have been disclosed only for illustrating the principle of the present invention, but they are not intended to limit the present invention. The person skilled in the art can make various modifications and variations of the invention without departing from the scope of the invention as defined by the appended claims.

## Claims

1. A sealant composition (33), comprising sealant and a light converting material (4) uniformly distributed in the sealant, wherein the light converting material comprises a particulate quantum dot material and is capable of converting incident light entering (6) into the sealant to light (7) for curing the sealant.

2. The sealant composition (33) according to claim 1, wherein the light converting material (4) accounts for 0.5 to 5.0% by mass of the sealant composition (33), preferably 1.0 to 4.0% by mass.

3. The sealant composition (33) according to claim 1, wherein the quantum dot material has a particle size in a range of 1 nm to 1000 nm.

4. The sealant composition (33) according to claim 1, wherein the quantum dot material comprises any one or more of CdS, ZnS, CdSe, and carbon quantum dots.

5. The sealant composition (33) according to claim 1, wherein the incident light (6) is ultraviolet light and the sealant comprises a visible light curable resin.

6. A display panel comprising an array substrate (1) and a color film substrate (2), wherein the array substrate (1) and the color film substrate are bonded into a cell by curing of the sealant composition (33) according to any one of claims 1-5.

7. A method for manufacturing a display panel, comprising steps of:
preparing a sealant composition (33) according to any one of claims 1-5;
applying the sealant composition on the non-display region in the periphery of the array substrate (1) or on the corresponding region of the color film substrate (2) to the non-display region in the periphery of the array substrate (1); and
curing the sealant composition (33) by irradiating it with incident light (6).

8. The method for manufacturing a display panel according to claim 7, wherein the step of preparing the sealant composition (33) comprises uniformly mixing the sealant and the light converting material (4) to obtain the sealant composition (33).

9. The method for manufacturing a display panel according to claim 7, wherein the step of applying the sealant composition (33) on the non-display region in the periphery of the array substrate (1) or on the corresponding region of the color film substrate (2) to the non-display region in the periphery of the array substrate (1) comprises adding the sealant composition (33) into a coating equipment and spraying the sealant composition (33) on the non-display region in the periphery of the array substrate (1) or on the corresponding region of the color film substrate (2) to the non-display region in the periphery of the array substrate (1) through the nozzle of the coating equipment.

10. The method for manufacturing a display panel according to claim 7, wherein the step of curing the sealant composition (33) by irradiating it with incident light (6) comprises irradiating from array substrate (1) side for a predetermined time with incident light (6) having a predetermined intensity, so as to complete the curing of the sealant composition (33).

11. A display device, comprising the display panel according to claim 6.

## Patentansprüche

1. Dichtungsmittelzusammensetzung (33), ein Dichtungsmittel und ein Lichtumwandlungsmaterial (4) aufweisend, das gleichmäßig in dem Dichtungsmittel verteilt ist, wobei das Lichtumwandlungsmaterial ein teilchenförmiges Quantenpunktmaterial aufweist und in der Lage ist, einfallendes Licht (6), das in das Dichtungsmittel eintritt, in Licht (7) zum Härten des Dichtungsmittels umzuwandeln.

2. Dichtungsmittelzusammensetzung (33) nach Anspruch 1, wobei das Lichtumwandlungsmaterial (4) 0,5 bis 5,0 Masseprozent der Dichtungsmittelzusammensetzung (33) ausmacht, vorzugsweise 1,0 bis 4,0 Masseprozent.

3. Dichtungsmittelzusammensetzung (33) nach Anspruch 1, wobei das Quantenpunktmaterial eine Teilchengröße in einem Bereich von 1 nm bis 1000 nm aufweist.

4. Dichtungsmittelzusammensetzung (33) nach Anspruch 1, wobei das Quantenpunktmaterial CdS-, ZnS-, CdSe-und/oder Kohlenstoff-Quantenpunkte aufweist.

5. Dichtungsmittelzusammensetzung (33) nach Anspruch 1, wobei das einfallende Licht (6) ultraviolettes Licht ist und das Dichtungsmittel ein mit sichtbarem Licht härtbares Harz aufweist.

6. Anzeigetafel mit einem Arraysubstrat (1) und einem Farbfilmsubstrat (2), wobei das Arraysubstrat (1) und das Farbfilmsubstrat durch Aushärten der Dichtungsmittelzusammensetzung (33) nach einem der Ansprüche 1 - 5 zu einer Zelle verbunden sind.

7. Verfahren zur Herstellung einer Anzeigetafel, die folgenden Schritte umfassend:
Herstellen einer Dichtungsmittelzusammensetzung (33) nach einem der Ansprüche 1 - 5;
Auftragen der Dichtungsmittelzusammensetzung auf den Nicht-Anzeigebereich in der Peripherie des Arraysubstrats (1) oder auf den entsprechenden Bereich des Farbfilmsubstrats (2) zu dem Nicht-Anzeigebereich in der Peripherie des Arraysubstrats (1); und
Aushärten der Dichtungsmittelzusammensetzung (33) durch ein Bestrahlen mit einfallendem Licht (6).

8. Verfahren zur Herstellung einer Anzeigetafel nach Anspruch 7, wobei der Schritt des Herstellens der Dichtungsmittelzusammensetzung (33) ein gleichmäßiges Mischen des Dichtungsmittels und des Lichtumwandlungsmaterials (4) umfasst, um die Dichtungsmittelzusammensetzung (33) zu erhalten.

9. Verfahren zur Herstellung einer Anzeigetafel nach Anspruch 7, wobei der Schritt des Auftragens der Dichtungsmittelzusammensetzung (33) auf den Nicht-Anzeigebereich in der Peripherie des Arraysubstrats (1) oder auf den entsprechenden Bereich des Farbfilmsubstrats (2) zu dem Nicht-Anzeigebereich in der Peripherie des Arraysubstrats (1) ein Hinzufügen der Dichtungsmittelzusammensetzung (33) in eine Beschichtungsvorrichtung und ein Sprühen der Dichtungsmittelzusammensetzung (33) auf den Nicht-Anzeigebereich in der Peripherie des Arraysubstrats (1) oder auf den entsprechenden Bereich des Farbfilmsubstrats (2) zu dem Nicht-Anzeigebereich in der Peripherie des Arraysubstrats (1) durch die Düse der Beschichtungsvorrichtung umfasst.

10. Verfahren zur Herstellung einer Anzeigetafel nach Anspruch 7, wobei der Schritt des Aushärtens der Dichtungsmittelzusammensetzung (33) durch das Bestrahlen mit einfallendem Licht (6) ein Bestrahlen von der Seite des Arraysubstrats (1) für eine vorbestimmte Zeit mit einfallendem Licht (6) mit einer vorbestimmten Intensität umfasst, um das Aushärten der Dichtungsmittelzusammensetzung (33) zu vollenden.

11. Anzeigevorrichtung, die Anzeigetafel nach Anspruch 6 aufweisend.

## Revendications

1. Composition de scellant (33), comprenant un scellant et un matériau de conversion de lumière (4) réparti uniformément dans le scellant, dans laquelle le matériau de conversion de lumière comprend un matériau particulaire à points quantiques et est capable de convertir une lumière incidente entrant (6) dans le scellant en une lumière (7) pour durcir le scellant.

2. Composition de scellant (33) selon la revendication 1, dans laquelle le matériau de conversion de lumière (4) représente de 0,5 à 5,0 % en masse de la composition de scellant (33), de préférence de 1,0 à 4,0 % en masse.

3. Composition de scellant (33) selon la revendication 1, dans laquelle le matériau à points quantiques a une taille de particules comprise dans une plage allant de 1 nm à 1000 nm.

4. Composition de scellant (33) selon la revendication 1, dans laquelle le matériau à points quantiques comprend un quelconque ou plusieurs points quantiques de CdS, ZnS, CdSe et carbone.

5. Composition de scellant (33) selon la revendication 1, dans laquelle la lumière incidente (6) est une lumière ultraviolette et le scellant comprend une résine durcissable à la lumière visible.

6. Panneau d'affichage comprenant un substrat de réseau (1) et un substrat de film de couleur (2), dans lequel le substrat de réseau (1) et le substrat de film de couleur sont liés dans une cellule par le durcissement de la composition de scellant (33) selon l'une quelconque des revendications 1 à 5.

7. Procédé de fabrication d'un panneau d'affichage, comprenant les étapes de :
préparation d'une composition de scellant (33) selon l'une quelconque des revendications 1 à 5 ;
application de la composition de scellant sur la région de non-affichage dans la périphérie du substrat de réseau (1) ou sur la région correspondante du substrat de film de couleur (2) sur la région de non-affichage dans la périphérie du substrat de réseau (1) ; et
durcissement de la composition de scellant (33) par son irradiation avec une lumière incidente (6).

8. Procédé de fabrication d'un panneau d'affichage selon la revendication 7, dans lequel l'étape de préparation de la composition de scellant (33) comprend le mélange uniforme du scellant et du matériau de conversion de lumière (4) pour obtenir la composition de scellant (33).

9. Procédé de fabrication d'un panneau d'affichage selon la revendication 7, dans lequel l'étape d'application de la composition de scellant (33) sur la région de non-affichage dans la périphérie du substrat de réseau (1) ou sur la région correspondante du substrat de film de couleur (2) sur la région de non-affichage dans la périphérie du substrat de réseau (1) comprend l'ajout de la composition de scellant (33) dans un équipement de revêtement et la pulvérisation de la composition de scellant (33) sur la région de non-affichage dans la périphérie du substrat de réseau (1) ou sur la région correspondante du substrat de film de couleur (2) sur la région de non-affichage dans la périphérie du substrat de réseau (1) à travers la buse de l'équipement de revêtement.

10. Procédé de fabrication d'un panneau d'affichage selon la revendication 7, dans lequel l'étape du durcissement de la composition de scellant (33) par son irradiation avec une lumière incidente (6) comprend l'irradiation depuis un côté de substrat de réseau (1) pendant un temps prédéterminé avec une lumière incidente (6) ayant une intensité prédéterminée, de manière à accomplir le durcissement de la composition de scellant (33).

11. Dispositif d'affichage, comprenant le panneau d'affichage selon la revendication 6.
